(19) **Europäisches Patentamt**
**European Patent Office**
**Office européen des brevets**

(11) **EP 4 015 594 B1**

(12) **EUROPEAN PATENT SPECIFICATION**

(45) Date of publication and mention
of the grant of the patent:
**20.12.2023   Bulletin 2023/51**

(21) Application number: **20852539.4**

(22) Date of filing: **11.08.2020**

(51) International Patent Classification (IPC):
*C09J 7/24* (2018.01)      *C09J 7/10* (2018.01)
*C08J 5/18* (2006.01)      *C09J 109/02* (2006.01)
*C09J 109/06* (2006.01)      *C09J 115/00* (2006.01)

(52) Cooperative Patent Classification (CPC):
(C-Sets available)
**C09J 109/02; C08J 5/18; C09J 7/10; C09J 7/245;**
**C09J 109/06; C09J 115/005;** C08J 2327/08;
C08J 2409/02; C08J 2411/02; C08K 3/36;
C08K 5/0016; C08K 5/12; C08K 2003/265;
C08L 27/06; C09J 2203/302;                    (Cont.)

(86) International application number:
**PCT/JP2020/030569**

(87) International publication number:
**WO 2021/029403 (18.02.2021 Gazette 2021/07)**

(54) **ADHESIVE TAPE**

KLEBEBAND

RUBAN ADHÉSIF

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **15.08.2019   JP 2019149013**

(43) Date of publication of application:
**22.06.2022   Bulletin 2022/25**

(73) Proprietor: **Denka Company Limited**
**Tokyo 103-8338 (JP)**

(72) Inventors:
• **MIURA, Manabu**
**Tokyo 103-8338 (JP)**
• **YOSHIMURA, Daisuke**
**Tokyo 103-8338 (JP)**
• **KOBAYASHI, Naoki**
**Tokyo 103-8338 (JP)**
• **KONDO, Atsunori**
**Tokyo 103-8338 (JP)**

(74) Representative: **Murgitroyd & Company**
**Murgitroyd House**
**165-169 Scotland Street**
**Glasgow G5 8PL (GB)**

(56) References cited:
**EP-A1- 3 075 806          EP-A1- 3 279 283**
**EP-A1- 3 597 715          WO-A1-2016/158411**
**WO-A1-2016/158412          WO-A1-2018/168990**
**JP-A- H09 263 733          JP-A- S62 158 734**

• **"POLYVINYLCHLORIDE//POLYVINYLAMINE",**
**ROMPP CHEMIE LEXIKON, XX, XX, no. 1, 1**
**January 1995 (1995-01-01), pages 3579-3581,**
**XP002907558,**

EP 4 015 594 B1

(52) Cooperative Patent Classification (CPC): (Cont.)
C09J 2301/408; C09J 2301/41; C09J 2409/00;
C09J 2409/006; C09J 2415/00; C09J 2415/006;
C09J 2427/00; C09J 2427/006

C-Sets
**C08L 27/06, C08K 3/04, C08L 9/02;**
**C08L 27/06, C08K 5/12, C08L 9/02;**
C08L 27/06, C08K 5/0016, C08L 9/02;
C09J 2409/00, C09J 2427/00;
C09J 2409/006, C09J 2427/006;
C09J 2415/00, C09J 2427/00;

C09J 2415/006, C09J 2427/006

**Description**

**TECHNICAL FIELD**

The present invention relates to adhesive tape.

**BACKGROUND ART**

Conventionally, binding tape is used to bind electrical wires in predetermined shapes. Substrates with excellent flexibility are often used in tape that binds electrical wires and the electrical wires bound thereby can be miniaturized while having excellent strength and bendability and can be installed in narrow, hidden locations within complicated electrical wiring. However, in cases such as incorporation in electric motor devices and the like, there are problems such as wear due to friction between electrical wires and friction sounds that can occur due to vibration when a device is driven.

Normally, for the substrates of binding tape for electrical wires, etc., tapes that have a polyvinyl chloride resin as the substrate are often used, but in applications in which acoustic absorption is demanded, binding tape provided with a substrate layer comprising woven fabric, non-woven fabric, etc. is used with the objective of reducing percussive sounds or friction sounds involved with the abovementioned vibration. For example, Patent Document 1 describes, as a binding tape having such acoustic absorption, an adhesive tape wherein a substrate layer comprising a non-woven fabric to which a binder has been added is provided to a web that has been strengthened mechanically or by wet-laying.

However, substrates comprising a woven fabric or a non-woven fabric are constituted by yarn or fibers, so there are gaps on the order of several $\mu$m to several mm between fibers. There are cases of dirt or dust contaminating or water, lubricating oil, or chemicals such as refrigerants permeating such gaps and contaminating the electrical wires inside. Further, there is also the problem of components formed from glass, resin, etc. breaking due to an automobile collision or the like and sharp parts at the broken locations pushing through the gaps, etc. and damaging the electrical wires inside.

As an adhesive tape capable of preventing contamination or corrosion of a covered article due to contamination by dirt or dust or by water, oil, etc. discussed above, for example, Patent Document 2 presents an adhesive tape comprising a rubber substrate such as butyl rubber. Further, adhesive tape having a thick polyvinyl chloride resin as a substrate represented by Patent Documents 3 and 4 is used with the objective of protecting electrical wires from the sharp tips discussed above.

Further the disclosures of WO 2016/158412 A1, WO 2016/158411 A1, JP H09 263733 A, WO 2018/168990 A1, EP 3 075 806 A1, EP 3 279 283 A1 and JP S62 158734 A may be helpful for understanding the present invention.

EP 3 075 806 A1 relates to a pressure-sensitive adhesive (PSA) tape comprising a polyvinyl chloride (PVC) film. The PVC film constituting the PSA tape comprises, as the plasticizer, a polyester-based plasticizer having a molecular weight of 1000 or greater and a carboxylic acid ester having a molecular weight of less than 1000. The PVC adhesive tape having such a constitution is likely to combine heat resistance and other properties (e.g. initial adhesive strength and low-temperature properties) at a high level. In the PVC film, the weight WPLH of the polyester-based plasticizer having the molecular weight of 1000 or greater and the weight WPLL of the carboxylic acid ester having the molecular weight of less than 1000 satisfy the formula $1 \leq W PLH / W PLL \leq 7$.

EP 3 279 283 A1 discloses a polyvinyl chloride (PVC) adhesive tape less susceptible to cracking at low temperatures even with thin PVC film. The pressure-sensitive adhesive (PSA) tape provided by the present invention comprises a PVC film and a PSA layer placed on at least one face of the PVC film. The PSA tape shows a tensile elongation at break of 80% or higher at -20° C.

**CITATION LIST**

**PATENT LITERATURE**

Patent Document 1: JP 2004-524376 A

Patent Document 2: JP 2006-152192 A

Patent Document 3: JP 5572546 B

Patent Document 4: JP H11-7856 A

## SUMMARY OF INVENTION

### TECHNICAL PROBLEM

However, in addition to the adhesive tape described in Patent Document 2 not being able to withstand punctures by the sharp parts at broken locations when components formed from glass, resin, etc. break due to an automobile collision or the like discussed above, there is also the problem of wear occurring due to friction resulting from the vibration of electric motor devices. Further, the diameter increases when electrical wires are wrapped with the adhesive tape or protective material described in Patent Documents 3 and 4, so there are the problems of bendability of the electrical wires being impaired by binding and it not being possible to bind electrical wires with a small diameter.

Thus, the present invention addresses the problem of providing an adhesive tape that can reduce percussive sounds or friction sounds, can prevent contamination of a covered article due to contamination by dirt or dust or permeation by water or oil, has durability against puncture or friction, and easily bends after binding a covered article.

### SOLUTION TO PROBLEM

With respect to this problem, as a result of diligent research, the present inventors found that all of problems discussed above can be solved by forming a composition wherein a specific elastomer and a plasticizer are blended with a polyvinyl chloride resin in a tape shape, thereby completing the present invention. The present invention therefore refers to an adhesive tape according to claim 1. Advantageous embodiments may include features of depending claims.

That is, the present invention has the following aspects.

[1] An adhesive tape having a substrate comprising 100 parts by mass of a polyvinyl chloride, with the polyvinyl chloride including one or more of the group consisting of homopolymers of polyvinyl chloride, vinyl chloride-vinyl acetate copolymers, vinyl chloride-ethylene copolymers and vinyl chloride-propylene copolymers, and, with respect to the 100 parts by mass of the polyvinyl chloride, 10-100 parts by mass of an elastomer and 10-100 parts by mass of a plasticizer, wherein the elastomer comprises an acrylonitrile monomer unit and at least one monomer unit selected from the group consisting of a chloroprene monomer unit, a butadiene monomer unit and an isoprene monomer unit and the adhesive tape has an attenuation value of 2 dB or greater in an acoustic absorption test. The test is performed by bending a 350 mm $\times$ 190 mm aluminum plate with a plate thickness of 0.3 mm into a semicircle with a diameter of 290 mm, dropping a steel rod with a diameter of 8 mm with a load of 0.16 N from a position 20 mm above the apex of the aluminum plate, measuring the noise at impact in dB as units with a microphone installed 50 mm above the impact position. The noise when one layer of an adhesive tape sample with a dimension of 25 mm $\times$ 50 mm is attached to the impact position of the steel rod is measured and the difference with respect to the noise measured with the steel rod alone is defined as the attenuation value. Further the thickness of the substrate is 150 - 750 $\mu$m.

[2] The adhesive tape described in [1], wherein the glass transition temperature of the elastomer is -40°C to 0°C. The glass transition temperature is the inflection point of the change in heat capacity according to a differential scanning calorimetry method when the temperature is changed from -100°C to 100°C at a rate of temperature increase of 10°C/minute under atmospheric pressure. The glass transition temperature further conforms to the Japanese Industrial Standard (JIS) K 7121 and can be calculated from the intermediate glass transition temperature, the extrapolated glass transition initiation temperature and the extrapolated glass transition ending temperature. The intermediate glass transition temperature is defined as the temperature at the intersection of a straight line equidistant in the direction of the vertical axis from straight lines extended from each baseline with the curved line of the stepwise change portion of the glass transition. The extrapolated glass transition initiation temperature is defined as the temperature at the intersection between a straight line extending the low-temperature side baseline to the high-temperature side and a tangent line drawn at the point where the gradient of the curved line of the stepwise change portion of the glass transition is at its maximum. The extrapolated glass transition ending temperature is defined as the temperature at the intersection between a straight line extending the high- temperature baseline to the low-temperature side and a tangent line drawn at the point where the gradient of the curved line of the stepwise change portion of the glass transition is at its maximum. The glass transition temperature is then the value measured for the intermediate glass transition temperature directly under the conditions described in the differential scanning calorimetry method.

[3] The adhesive tape described in [1] or [2], wherein the plasticizer is a diester of phthalic acid and an alcohol with 9 or 10 carbon atoms.

[4] The adhesive tape described in any one of [1] to [3], wherein the adhesive force when one surface of the substrate is superimposed on another surface of the substrate is 0.5-5 N/10 mm. The adhesive force is the 180° peeling adhesive force between the one surface and the other surface as measured based on Japanese Industrial Standard (JIS) Z 0237.

[5] The adhesive tape described in any one of [1] to [4], wherein the substrate comprises 1-50 parts by mass of carbon black with respect to the 100 parts by mass of the polyvinyl chloride.

[6] The adhesive tape described in any one of [1] to [5], wherein the tape width of the adhesive tape is 10-300 mm and the deformation rate after being wound into a rolled form and left for 72 hours at 65°C is 10% or less.

**EFFECTS OF INVENTION**

According to the present invention, an adhesive tape that can reduce percussive sounds or friction sounds, can prevent contamination of a covered article due to contamination by dirt or dust or permeation by water or oil, has durability against puncture or friction, and easily bends after binding a covered article can be provided.

**BRIEF DESCRIPTION OF DRAWINGS**

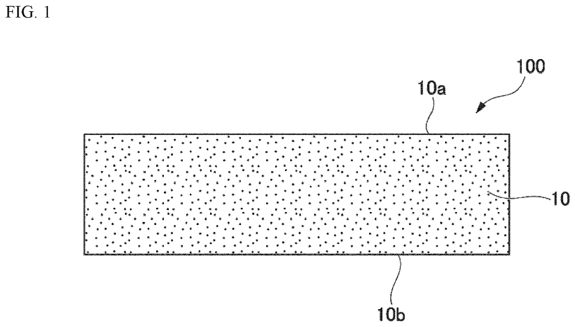

Figure 1 is a cross-sectional view showing an adhesive tape according to Example 1 of the present invention.

**DESCRIPTION OF EMBODIMENTS**

Embodiments of the present invention will be explained in detail below, but the present invention is not limited to the embodiments below and can be implemented by adding appropriate modifications so long as the effects of the present invention are not inhibited.

[Adhesive Tape]

The adhesive tape of the present invention is an adhesive tape having a substrate comprising 100 parts by mass of a polyvinyl chloride, with the polyvinyl chloride including one or more of the group consisting of homopolymers of polyvinyl chloride, vinyl chloride-vinyl acetate copolymers, vinyl chloride-ethylene copolymers and vinyl chloride-propylene copolymers, and, with respect to the 100 parts by mass of the polyvinyl chloride, 10-100 parts by mass of an elastomer and 10-100 parts by mass of a plasticizer, characterized by the elastomer comprising an acrylonitrile monomer unit and at least one monomer unit selected from the group consisting of a chloroprene monomer unit, a butadiene monomer unit, and an isoprene monomer unit and the adhesive tape having an attenuation value of 2 dB or greater in a sound attenuation test. Such an adhesive tape can reduce percussive sounds or friction sounds, can prevent contamination of a covered article due to contamination by dirt or dust or permeation by water or oil, has durability against puncture or friction, and furthermore, easily bends after binding a covered article. The attenuation value of the adhesive tape indicates a value determined by the acoustic absorption test described below.

<Acoustic Absorption Test>

The test was performed with a method similar to that for "soundproof material" in Section 5.5.5 of LV312-1, the unified standard for German automobile makers, and the attenuation value was calculated. Specifically, a 350 mm $\times$ 190 mm aluminum plate with a plate thickness of 0.3 mm is bent into a semicircle with a diameter of 290 mm. Then, a steel rod with a diameter of 8 mm is dropped with a load of 0.16 N from a position 20 mm above the apex of the aluminum plate. At this time, the noise at impact is measured (units: dB) with a microphone installed 50 mm above the impact position. The noise when one layer of an adhesive tape sample (dimensions: 25 mm $\times$ 50 mm) is attached to the impact position of the steel rod is measured and the difference with respect to the noise measured with the steel rod alone is the attenuation value.

The attenuation value for the adhesive tape of the present invention in the abovementioned acoustic absorption test is 2 dB or greater, preferably 3 dB or greater, and still more preferably 4 dB or greater. The higher the attenuation value in the acoustic absorption test, the better percussive sounds and friction sounds due to engine vibrations, shaking during travel, etc. can be suppressed. Examples of methods to increase the attenuation value include, for instance, adjustments to the blend of the tape substrate (for example, increasing the ratios of the elastomer component and the plasticizer, adding a filler, etc.), increasing the thickness of the tape, etc.

<Substrate>

The substrate of the present invention comprises 100 parts by mass of polyvinyl chloride, with the polyvinyl chloride including one or more of the group consisting of homopolymers of polyvinyl chloride, vinyl chloride-vinyl acetate copolymers, vinyl chloride-ethylene copolymers and vinyl chloride-propylene copolymers, and, with respect to the 100 parts by mass of polyvinyl chloride, 10-100 parts by mass of an elastomer and 10-100 parts by mass of a plasticizer. The substrate of the present invention has adhesion in and of itself. Therefore, the adhesive tape of the present invention may lack an adhesive layer. That is, the adhesive tape may be constituted by the substrate alone. When the adhesive tape is constituted by the substrate alone, it is preferable that one surface of the substrate not have adhesive force. That is, one surface of the substrate may be roughened.

In one preferred aspect, the adhesive force when one surface of the substrate is superimposed on the other surface of the substrate is preferably 0.1-10 N/10 mm and more preferably 0.5-5 N/10 mm. The adhesive force indicates the 180° peeling adhesive force value measured with a method conforming to JIS Z 0237. If the adhesive force is within the abovementioned range, sufficient binding is readily obtained when used as, for example, binding tape.

Both the property of durability against puncture or friction and that of high flexibility such that the tape can easily bend after binding electrical wires, etc. (hereafter referred to as "bendability") are required of the adhesive tape of the present invention. Furthermore, while satisfying such demands, resistance against dirt or dust and water or oil (hereafter also described as "water resistance" and "oil resistance") are also necessary. Soft polyvinyl chloride resins that comprise polyvinyl chloride and a plasticizer are suitable as components that satisfy these capabilities.

The substrate of the adhesive tape of the present invention must comprise polyvinyl chloride and a plasticizer and the ratio thereof is 10-100 parts by mass of the plasticizer, preferably 20-80 parts by mass of the plasticizer, and more preferably 30-70 parts by mass of the plasticizer with respect to 100 parts by mass of polyvinyl chloride. If the plasticizer is below the abovementioned lower limit, bendability falls and if the plasticizer exceeds the abovementioned upper limit, durability against puncture or friction falls.

Further, acoustic absorption in order to suppress the generation of sounds due to impacts or friction is required of the adhesive tape of the present invention. Elastomers are suitable as a component that does not impair the durability discussed above while meeting this requirement. The ratio thereof is 10-100 parts by mass of the elastomer, preferably 20-80 parts by mass of the elastomer, and more preferably 30-70 parts by mass of the elastomer with respect to 100 parts by mass of polyvinyl chloride. If the elastomer is below the abovementioned lower limit, acoustic absorption falls and if the elastomer exceeds the abovementioned upper limit, durability against puncture or friction falls.

Examples of the polyvinyl chloride that the substrate comprises include homopolymers of polyvinyl chloride, vinyl chloride-vinyl acetate copolymers, vinyl chloride-ethylene copolymers, vinyl chloride-propylene copolymers. These may be used individually or in a combination of two or more. Among these, homopolymers of polyvinyl chloride are preferred because they have excellent durability against puncture or friction, water resistance, and oil resistance and are generic and can be used at low prices.

The degree of polymerization of polyvinyl chloride is not particularly limited so long as the effects of the present invention are present, but that with an average degree of polymerization of 500-4000 is preferred, that with an average degree of polymerization of 800-3000 is more preferred, and that with an average degree of polymerization of 1000-2000 is especially preferred from the viewpoint of obtaining favorable workability.

For example, phthalic acid esters, isophthalic acid esters, terephthalic acid esters, adipic acid esters, trimellitic acid esters, polyesters thereof, phosphoric acid-based plasticizers, epoxy-based plasticizers, etc. can be used as the plasticizer.

Specific examples of the plasticizer include diisononyl phthalate (DINP), diheptyl phthalate (DHP), di-2-ethylhexyl phthalate (DEHP), di-n-octyl phthalate (n-DOP), diisodecyl phthalate (DIDP), di-2-ethylhexyl isophthalate (DOIP), di-2-ethylhexyl terephthalate (DOTP), benzyl butyl phthalate (BBP), tri-2-ethylhexyl trimellitate (TOTM), di-2-ethylhexyl adipate (DOA), tricresyl phosphate (TCP), benzyl octyl adipate (BOA), adipic acid-propylene glycol-based polyesters, adipic acid-butylene glycol-based polyesters, phthalic acid-propylene glycol-based polyesters, diphenyl cresyl phosphate (DPCP), diisodecyl adipate, epoxidized soybean oil, epoxidized linseed oil, chlorinated paraffin, etc. These may be used individually or in a combination of two or more.

Among the abovementioned plasticizers, phthalic acid diesters such as diisononyl phthalate (DINP), diheptyl phthalate (DHP), di-2-ethylhexyl phthalate (DEHP), di-n-octyl phthalate (n-DOP), and diisodecyl phthalate (DIDP), which have excellent plasticizing effects on polyvinyl chloride resins and minimal bleed-out, are preferred and among these, diesters of phthalic acid and an alcohol with 9 or 10 carbon atoms such as diisononyl phthalate (DINP) and diisodecyl phthalate (DIDP) are especially preferred. Diesters with an alcohol with 9 or more carbon atoms are preferred because they have smaller effects on the human body. If the diester is with an alcohol with 10 or fewer carbon atoms, more favorable plasticizing effects are readily obtained.

An elastomer with high diffusion relative to the polyvinyl chloride discussed above, that does not readily impair durability against puncture or friction, and that contains an acrylonitrile monomer unit and at least one monomer unit selected from the group consisting of a chloroprene monomer unit, a butadiene monomer unit, and an isoprene monomer unit must be used as the elastomer. Further, an elastomer consisting of an acrylonitrile monomer unit and at least one monomer unit selected from the group consisting of a chloroprene monomer unit, a butadiene monomer unit, and an isoprene monomer unit is more preferred.

Specific examples of the elastomer include acrylonitrile-chloroprene rubber, acrylonitrile-butadiene rubber, hydrogenated acrylonitrile-butadiene rubber, carboxy-modified acrylonitrile-butadiene rubber, acrylonitrile-isoprene rubber, acrylonitrile-butadiene-isoprene rubber, etc. and among these, acrylonitrile-chloroprene rubber is preferred from the viewpoint of more excellent water resistance and oil resistance. Further, acrylonitrile-butadiene rubber is preferred from the viewpoint of excellent durability against puncture or friction.

The ratio of the acrylonitrile monomer unit in the elastomer is preferably 5-45% by mass and more preferably 15-35% by mass with respect to the total amount of all monomer units of the elastomer. If the ratio of acrylonitrile in the elastomer is within the abovementioned range, compatibility with polyvinyl chloride is high and high wear durability is therefore readily obtained.

The glass transition temperature of the elastomer is preferably -40°C to 0°C, more preferably -35°C to -5°C, and still more preferably -32°C to -8°C. If the glass transition temperature is equal to or greater than the abovementioned lower limit, durability against puncture or friction is not readily impaired. Further, if the glass transition temperature is equal to or lower than the abovementioned upper limit, bendability is not readily impaired.

The glass transition temperature changes depending on the measurement method and measurement conditions. Thus, the glass transition temperature in the elastomer in the present embodiment is the inflection point of the change in heat capacity according to a differential scanning calorimetry (DSC) method when the temperature is changed from -100°C to 100°C at a rate of temperature increase of 10°C/minute under atmospheric pressure. The glass transition temperature as referred to here conforms to JIS K 7121 and can be calculated from intermediate glass transition temperature Tmg, extrapolated glass transition initiation temperature Tig, and extrapolated glass transition ending temperature Teg. When doing so, Tmg is defined as the temperature at the intersection of a straight line equidistant in the direction of the vertical axis from straight lines extended from each baseline with the curved line of the stepwise change portion of the glass transition; Tig is defined as the temperature at the intersection between a straight line extending the low-temperature side baseline to the high-temperature side and a tangent line drawn at the point where the gradient of the curved line of the stepwise change portion of the glass transition is at its maximum; and Teg is defined as the temperature at the intersection between a straight line extending the high-temperature baseline to the low-temperature side and a tangent line drawn at the point where the gradient of the curved line of the stepwise change portion of the glass transition is at its maximum. The glass transition temperature in the elastomer of the present embodiment is the value measured for Tmg directly under the conditions described in the differential scanning calorimetry (DSC) method discussed previously.

The adhesive tape of the present invention may include an inorganic filler as an extender, a reinforcement, etc. Examples of the inorganic filler include, for instance, aluminum hydroxide, magnesium hydroxide, zirconium hydroxide, calcium hydroxide, potassium hydroxide, barium hydroxide, ammonium polyphosphate, a polyphosphoric acid amide, zirconium oxide, magnesium oxide, zinc oxide, titanium oxide, molybdenum oxide, guanidine phosphate, hydrotalcite, smectites, zinc borate, anhydrous zinc borate, zinc metaborate, barium metaborate, antimony oxide, antimony trioxide, antimony pentaoxide, red phosphorus, talc, kaolin, clay, alumina, silica, boehmite, bentonite, sodium silicate, calcium silicate, calcium sulfate, calcium carbonate, magnesium carbonate, carbon black, etc. These may be used individually or in a combination of two or more. Among the abovementioned inorganic fillers, talc, kaolin, clay, silica, and carbon black, which are capable of further improving durability against puncture or friction, are preferred. Carbon black, in which reinforcement effects with both polyvinyl chloride and the elastomer in particular are higher, is more preferred. In one aspect of the present invention, it is preferred that 1-50 parts by mass and more preferably 10-50 parts by mass of carbon black are included in the substrate with respect to 100 parts by mass of polyvinyl chloride.

The inorganic filler may be that obtained by pulverizing a natural product or may be that obtained by neutralizing and precipitating an aqueous solution or the like. Further, the inorganic filler may be that in which a functional group has been introduced with a surface treatment agent, etc. For example, a fatty acid, a rosin acid, a lignin acid, a quaternary ammonium salt, etc. can be used as the surface treatment agent.

A modifier, a dispersing agent, a colorant, a stabilizer, an anti-aging agent, a light absorber, a lubricant, etc. may be added, as necessary, to the adhesive tape of the present invention so long as the effects of the present invention are not hindered.

Examples of the modifier include, for instance, halogenated vinyl-based copolymers (vinyl chloride-vinyl acetate copolymers, vinyl chloride-ethylene copolymers, vinyl chloride-propylene copolymers, chlorinated polyethylene, and chlorinated polyvinyl chloride), elastomer components other than the elastomer (butadiene-styrene copolymers, methyl methacrylate-butadiene-styrene copolymers, methyl methacrylate-butyl acrylate copolymers, etc., ethylene-vinyl acetate copolymers, ether-based and ester-based polyurethanes, etc.), thermoplastic resins (polymethyl methacrylate, polymethyl acrylate, polyacrylonitrile, polyacrylonitrile-styrene copolymers), etc. These may be used individually or in a combination of two or more.

The content of the inorganic filler, the modifier, and the other additives is not particularly limited and these may be blended within a range that does not inhibit the effects of the present invention. For example, the additives can be blended at greater than 0 parts by mass and equal to or less than 50 parts by mass with respect to 100 parts by mass of polyvinyl chloride.

The adhesive tape of the present invention may have an adhesive layer. When the adhesive tape has an adhesive layer, the adhesive layer is preferably constituted by an adhesive. The adhesive is not particularly limited so long as the effects of the present invention are present and adhesives used in conventional binding tape can appropriately be used as such. For example, acrylic adhesives, rubber-based adhesives, silicone-based adhesives, urethane-based adhesives, etc. can be used as the adhesive, specifically. Further, the adhesive may contain any additive so long as the effects of the present invention are not inhibited.

Examples of the additives include, for instance, softening agents, tackifiers, surface lubricants, leveling agents, antioxidants, corrosion inhibitors, photostabilizers, ultraviolet light absorbers, thermal-resistance stabilizers, polymerization inhibitors, silane coupling agents, lubricants, inorganic or organic fillers, metal powders, pigments, etc. These may be used individually or in a combination of two or more.

When the adhesive tape has an adhesive layer, the thickness thereof is not particularly limited so long as the effects of the present invention are present and, for example, is preferably 5-100 $\mu$m and more preferably 10-50 $\mu$m.

Further, the adhesive layer may be constituted from a plurality of layers. When the adhesive layer is constituted from a plurality of layers, the total thickness of the adhesive layer is preferably adjusted so as to be within the abovementioned range.

[Adhesive Tape Manufacturing Method]

Examples of the manufacturing method for the adhesive tape of the present invention include methods wherein raw materials including the polyvinyl chloride, elastomer, and plasticizer discussed above are mixed, melt-kneaded, and then formed into a film with a predetermined thickness, width, and length. The melt kneading method is not particularly limited so long as the effects of the present invention are present, for example, various mixers and kneaders provided with a heater such as a twin-screw extruder, continuous and batch kneaders, rolls, or a Banbury mixer can be used. A composition wherein the raw materials have been dispersed uniformly by the abovementioned method can be film-formed in a sheet-like shape by common methods such as, for example, a calendar method, a T-die method, and an inflation method and the film-formed sheet can be used as tape by putting the same in a wound rolled form.

Further, in one aspect of the present invention, after the film-formed sheet has been wound into a rolled form, an annealing treatment is preferably performed for 1-6 hours at 100°C or greater, preferably at 100-130°C. This is preferred because the deformation rate explained below can be further reduced by performing such an annealing treatment.

The thickness of the adhesive tape of the present invention is preferably 150-750 $\mu$m, more preferably 250-650 $\mu$m, and still more preferably 300-600 $\mu$m. Due to the thickness being equal to or greater than the abovementioned lower limit, an adhesive tape with more excellent acoustic absorption and various durabilities can readily be obtained. Further, due to the thickness being equal to or less than the abovementioned upper limit, bendability after binding is readily more favorable. Moreover, the width of the adhesive tape of the present invention is preferably 10-300 mm, more preferably 15-250 mm, and still more preferably 18-220 mm. The binding area per unit length of the tape increases the greater the tape width, so the greater the tape width, the more readily the binding strength becomes favorable and the shorter the tape width the more readily the bendability after binding becomes more favorable.

The adhesive tape of the present invention is preferably wound in a rolled form with a uniform width from the standpoint of binding workability and it is still more preferable that this form be maintained even after changes in temperature and the passage of time. "Deformation" due to relaxation of residual strain occurs particularly in tape comprising an elastomer when left in an environment with a higher temperature than that at which the tape was film-formed or was wound into a rolled form. Accordingly, the lower the deformation rate the better. Examples of methods to reduce the deformation rate include adjustments to the blend of the tape substrate (for example, lowering the ratio of the elastomer component or the plasticizer, etc.), increasing the tape width, increasing the adhesive force between one surface of the tape and the other surface of the tape (the front surface and the rear surface of the tape), reducing the tension during winding, performing a heat treatment (annealing treatment) after winding, relaxing residual strain ahead of time, etc.

The deformation rate can be calculated with the following formula with the tape roll width prior to being left as W1 and the tape roll width after being left as W2.

$$[\text{Deformation Rate (\%)}] = ([W2]-[W1])/[W1] \times 100$$

In one aspect of the present invention, the deformation rate after having been left for 72 hours at 65°C is preferably 10% or lower and more preferably 5% or lower. The adhesive tape of the present invention does not require an adhesive layer, which serves as a source of deformation, so the deformation rate after having been left for 72 hours at 65°C can readily be made 10% or lower.

<Uses>

As discussed previously, the adhesive tape of the present invention can reduce percussive sounds or friction sounds, can prevent contamination of a covered article due to contamination by dirt or dust or permeation by water or oil, has durability against puncture or friction, and easily bends after binding a covered article. Therefore, the adhesive tape can be suitably used in fields where these capabilities are demanded, for example, electrical wiring in drive portions of electric motor devices, electrical portions of vehicles, etc. Further, the adhesive tape can also be suitably used in devices in which low noise, in particular, is related to product quality, such as home appliances, office supplies, and acoustic equipment. Naturally, the adhesive tape of the present invention is not limited to the abovementioned uses.

[Examples]

The present invention is explained in still further detail by examples and comparative examples below, but the present invention is not limited to these examples.

[Example 1]

<Elastomer Synthesis>

30 parts by mass of an acrylonitrile monomer, 30 parts by mass of a chloroprene monomer, 0.5 parts by mass of diethylxanthogen disulfide, 200 parts by mass of pure water, 5.00 parts by mass of potassium rosinate (manufactured by Harima Chemicals Group, Inc.), 0.40 parts by mass of sodium hydroxide, and 2.0 parts by mass of a sodium salt of a β-naphthalene sulfonic acid formaldehyde condensate (manufactured by Kao Corporation) were added to a polymerization tank that has an internal volume of 3 liters and is provided with a heating/cooling jacket and an agitator. 0.1 parts by mass of potassium persulfate was added as a polymerization initiator and polymerization was performed under a nitrogen gas stream at a polymerization temperature of 40°C. Separate addition of 40 parts by mass of the chloroprene monomer was performed and the separate addition was initiated 20 seconds after the initiation of polymerization. The flow rate of the separately added component was adjusted with a magnetic valve based on the change in the amount of heat of the coolant over the 10 seconds from the initiation of polymerization and the separate addition was continually performed by readjusting the flow rate every 10 seconds thereafter. The polymerization terminator phenothiazine was added to terminate polymerization at the point in time at the polymerization rate became 56% with respect to the total amount of the chloroprene monomer and the acrylonitrile monomer. Then, an acrylonitrile-chloroprene copolymer latex was obtained by removing the unreacted monomers in the reaction solution under reduced pressure. The obtained acrylonitrile-chloroprene copolymer latex was adjusted to pH 7.0 and demulsified by being frozen and coagulated on a metal plate that had been cooled to -20°C. A solid acrylonitrile-chloroprene rubber was obtained by washing the obtained sheet with water and drying for 15 minutes at 130°C.

The glass transition temperature of the abovementioned acrylonitrile-chloroprene rubber was -21°C.

The polymerization rate of the copolymer latex was calculated from the dry weight of the airdried copolymer latex. Specifically, the polymerization rate was calculated according to general formula (I) below. In the formula, the solid component concentration refers to the concentration (% by mass) of solid components excluding the solvent (water) and volatile components such as volatile chemicals and raw materials after heating 2 g of the sampled copolymer latex at 130°C. The total amount loaded is the total amount of raw materials, reagents, and solvent (water) loaded in the polymerization tank from the initiation of polymerization to a given time. The evaporation residue refers to the mass of the chemicals among the chemicals and raw materials that were loaded from the initiation of polymerization to a given time that did not volatilize under the condition of 130°C and remain as solid components with the polymer. The amount of monomers loaded is the total amount of the monomers initially added to the polymerization tank and the monomers added separately from the initiation of polymerization to a given time.

$$\text{Polymerization Rate (\%)} = \{(\text{Total Amount Loaded [g]} \times \text{Solid Component Concentration [\% by mass]}/100) - (\text{Evaporation Residue [g]})\}/\text{Amount of Monomers Loaded [g]} \times 100 \dots \text{(I)}$$

<Fabrication of Adhesive Tape>

100 parts by mass of polyvinyl chloride (manufactured by Taiyo Vinyl Corporation, product name "TH-1000"), 60 parts by mass of the abovementioned acrylonitrile-chloroprene rubber (glass transition temperature: -21°C) as an elastomer, 40 parts by mass of isononyl phthalate (manufactured by J-PLUS Co., Ltd., product name "DINP") as a plasticizer, and 50 parts by mass of carbon black (manufactured by ASAHI CARBON CO., LTD., product name "#70") were added together and after kneading for 5 minutes with an 8-inch twin roll (manufactured by Nishimura Machinery Co., Ltd.) at a roll temperature of 165°C, were film-formed into a sheet such that the thickness was 400 $\mu$m, the width was 100 mm, and the surface roughness (Ra) was 1 $\mu$m. Then, the sheet was wound into a rolled form and a heat treatment was performed for 2 hours at 100°C and an adhesive tape sample was obtained.

Figure 1 is a cross-sectional view showing an adhesive tape 100 according to Example 1 of the present invention. The surface roughness (Ra) of a surface 10a, which is one surface of a substrate 10 in the adhesive tape 100 of Example 1, is 1 $\mu$m. Further, the other surface 10b of the substrate 10 has adhesion.

<Acoustic Absorption Evaluation>

The attenuation value of the obtained adhesive tape sample is evaluated according to the following evaluation method.

The attenuation value was calculated by performing a test with a method similar to that for "soundproof material" in Section 5.5.5 of LV312-1, the unified standard for German automobile makers. Specifically, a 350 mm × 190 mm aluminum plate with a plate thickness of 0.3 mm was bent into a semicircle with a diameter of 290 mm. Next, in an environment with a temperature of 23 ± 2°C and humidity of 50 ± 10%, a steel rod with a diameter of 8 mm was dropped with a load of 0.16 N from a position 20 mm above the apex of the aluminum plate and at that time, the noise at impact was measured (units: dB) with a microphone installed 50 mm above the impact position. The noise when one layer of an adhesive tape sample (dimensions: 25 mm × 50 mm) is attached to the impact position of the steel rod was measured and the difference with respect to the noise measured with the steel rod alone was made the attenuation value. The results are shown in Table 1.

<Adhesive Force Evaluation>

The adhesive force of the obtained adhesive tape is the 180° peeling adhesive force between the one surface and the other surface as measured based on JIS Z 0237. That is, in Figure 1, the surface 10b of another adhesive tape 100 was attached to the surface 10a of an adhesive tape 100 and the 180° peeling adhesive force was measured. The results are shown in Table 1.

<Deformation Rate>

The deformation rate of the obtained adhesive tape sample after being left in a 65°C environment for 72 hours was calculated with the following formula with the tape roll width prior to being left as W1 and the tape roll width after being left as W2. The results are shown in Table 1.

$$[\text{Deformation Rate (\%)}] = ([W2]-[W1])/[W1] \times 100$$

<Binding Evaluation>

Binding was evaluated in the following manner.

20 electrical wires with a diameter of 1.5 mm and a length of 150 mm were bundled to create a group of electrical wires with a diameter of 10 mm and the adhesive tape (length 60 mm and width 50 mm, provided that MD is considered the length direction) was wound around the center of the group of electrical wires such that MD was perpendicular to the group of electrical wires. Next, 5 mm of the ends of the adhesive tape were superimposed on one another and pressed with fingers for 30 seconds to create an evaluation sample.

After the evaluation sample was heated for 1 minute in an oven with a 100°C atmosphere, the sample was removed from the oven and left for 30 minutes in an evaluation testing chamber with the temperature set to 23 ± 2°C and the humidity to 50 ± 5% RH. Then one end of the adhesive tape of the evaluation sample was gripped with one hand and the group of electrical wires was pulled with the other hand and the condition of the group of electrical wires was evaluated according to the following evaluation criteria. "C" or above is considered passing.

(Evaluation Criteria)

A: The group of electrical wires did not move at all in all evaluation samples.

B: The group of electrical wires slipped to the side to some degree in some evaluation samples.

C: The group of electrical wires was removed from the adhesive tape in some evaluation samples.

D: The group of electrical wires was easily removed from the adhesive tape in all evaluation samples.

<Bendability Evaluation>

The bendability of the adhesive tape after binding a bundle of electrical wires was evaluated according to the following method. Further, evaluating in accordance with the following evaluation criteria, "C" or above is considered passing.
First, a bundle of electrical wires was bound with the same method as for the binding evaluation discussed above. When the bundle of electrical wires is wound once around a side surface of a cylinder with a predetermined radius, the diameter of the smallest cylinder around which the bundle could be wound following the cylinder (without breaking) was measured.

(Evaluation Criteria)

A: The cylinder diameter was less than 5 mm.

B: The cylinder diameter was 5 mm or greater and less than 10 mm.

C: The cylinder diameter was 10 mm or greater and less than 15 mm.

D: The cylinder diameter was 15 mm or greater.

<Percussive Sound Suppression Evaluation>

The percussive sound suppression effects of the adhesive tape were evaluated according to the following method. Further, evaluating in accordance with the following evaluation criteria, "C" or above is considered passing.
A bundle of electrical wires was bound with the same method as for the binding evaluation. The bundle of electrical wires was wound once around a side surface of a stainless steel cylinder with a diameter of 50 mm and then affixed with the adhesive tape. Then, in an environment with a temperature of $23 \pm 2°C$ and humidity of $50 \pm 10\%$, a steel sphere with a diameter of 10 mm was dropped onto the bundle of electrical wires on the side surface of the cylinder from a height of 25 cm, generating a percussive sound. The sound pressure was measured (units: $\mu$Pa) with a microphone installed 50 mm above the position at which the sound was generated.

(Evaluation Criteria)

A: The sound pressure was less than 20 $\mu$Pa.

B: The sound pressure was 20 $\mu$Pa or greater and less than 40 $\mu$Pa.

C: The sound pressure was 40 $\mu$Pa or greater and less than 60 $\mu$Pa.

D: The sound pressure was 60 $\mu$Pa or greater.

<Friction Sound Suppression Evaluation>

The friction sound suppression effects of the adhesive tape were evaluated according to the following method. Further, evaluating in accordance with the following evaluation criteria, "C" or above is considered passing.

A bundle of electrical wires was bound with the same method as for the binding evaluation discussed above. A 10 mm ø corrugated tube (manufactured by Panduit Corp.) was placed on the bundle of electrical wires at an orientation of 90° with respect to the bundle of electrical wires and then, in an environment with a temperature of 23 $\pm$ 2°C and humidity of 50 $\pm$ 10%, the corrugated tube was moved back and forth at a speed of 50 $\pm$ 10 mm/second in the lengthwise direction, generating friction sounds. The sound pressure was measured (units: $\mu$Pa) with a microphone installed 20 mm above the position at which the sound was generated.

(Evaluation Criteria)

A: The sound pressure was less than 20 $\mu$Pa.

B: The sound pressure was 20 $\mu$Pa or greater and less than 40 $\mu$Pa.

C: The sound pressure was 40 $\mu$Pa or greater and less than 60 $\mu$Pa.

D: The sound pressure was 60 $\mu$Pa or greater.

<Puncture Durability Evaluation>

The puncture durability of the adhesive tape was evaluated according to the following method. Further, evaluating in accordance with the following evaluation criteria, "C" or above is considered passing.

The adhesive tape sample was fixed on a stage in which a 20 mm diameter hole had been made and, in an environment with a temperature of 23 $\pm$ 2°C and humidity of 50 $\pm$ 10%, a needle with a diameter of 1 mm and R 0.5 mm punctured the center of the hole at a speed of 50 mm/minute. The maximum load (N) until the needle penetrated the sample was measured at this time.

(Evaluation Criteria)

A: The maximum load was 15 N or greater.

B: The maximum load was 10 N or greater and less than 15 N.

C: The maximum load was 5 N or greater and less than 10 N.

D: The maximum load was less than 5 N.

<Wear Durability Evaluation>

The wear durability of the adhesive tape was evaluated according to the following method. Further, evaluating in accordance with the following evaluation criteria, "C" or above is considered passing.

In an environment with a temperature of 23 $\pm$ 2°C and humidity of 50 $\pm$ 10%, the adhesive tape sample was wound once around a cylinder with a diameter of 10 mm and the sample surface was then worn with sandpaper having a grain size of 180 $\mu$m from above at a speed of 150 mm/second. The wear distance (mm) until a hole was made in the sample was measured at this time.

(Evaluation Criteria)

A: The wear distance was 1500 mm or greater.

B: The wear distance was 900 mm or greater and less than 1500 mm.

C: The wear distance was 450 mm or greater and less than 900 mm.

D: The wear distance was less than 450 mm.

<Water Resistance Evaluation>

The water resistance of the adhesive tape was evaluated according to the following method. Further, evaluating in accordance with the following evaluation criteria, "C" or above is considered passing.
10 electrical wires with a diameter of 1.45 mm (1.65 sq) were bundled in a spiral-like manner and the adhesive tape sample was wrapped twice in a spiral thereon (half-wrapped), binding a bundle of electrical wires. After leaving the bundle of electrical wires in 40°C water for 72 hours, peeling at the end portions was observed.

(Evaluation Criteria)

A: Same state as immediately following binding; no change.

B: Signs of peeling (wrinkles on the surface) observed, but no peeling.

C: Partial peeling at parts of the end portions observed, but no peeling as a whole.

D: Complete peeling of the end portions.

<Oil Resistance Evaluation>

The oil resistance of the adhesive tape was evaluated according to the following method. Further, evaluating in accordance with the following evaluation criteria, "C" or above is considered passing.
10 electrical wires with a diameter of 1.45 mm (1.65 sq) were bundled in a spiral and the adhesive tape sample was wrapped twice in a spiral thereon (half-wrapped), binding a bundle of electrical wires. After leaving the bundle of electrical wires in 40°C engine oil (Mobil1™ 0W-16 from Exxon Mobil Corporation) for 72 hours, peeling at the end portions was observed.

(Evaluation Criteria)

A: Same state as immediately following binding; no change.

B: Signs of peeling (wrinkles on the surface) observed, but no peeling.

C: Partial peeling at parts of the end portions observed, but no peeling as a whole.

D: Complete peeling of the end portions.

[Examples 2-26 and Comparative Examples 1-7]

Adhesive tapes were created with methods similar to that of Example 1 other than changing the elastomer composition, the blending composition of the adhesive tape, the thickness, the width, and the surface roughness Ra as shown in Tables 1-3. The thicknesses and widths of the obtained adhesive tapes are shown in Tables 1-3. Further, the evaluations were carried out for each adhesive tape with the same methods as in Example 1 and the results are shown in Tables 1-3. It is noted that Example 21 does not fall under the scope of the present invention.
The details of the raw materials used in the abovementioned examples and comparative examples are as follows.

<Raw Materials Used>

(Polyvinyl Chloride)

Polyvinyl Chloride 1: Product name "TH-1000", manufactured by Taiyo Vinyl Corporation.
Polyvinyl Chloride 2: Product name "TH-1300", manufactured by Taiyo Vinyl Corporation.
Ethylene-polyvinyl chloride copolymer: Product name "TE-1050", manufactured by Taiyo Vinyl Corporation.

(Elastomer)

Acrylonitrile-butadiene rubber: Product name "Nipol® 1043", manufactured by ZEON CORPORATION, glass transition temperature: -37°C.
Hydrogenated acrylonitrile-butadiene rubber: Product name "Zetpol® 2010", manufactured by ZEON CORPORATION, glass transition temperature: -24°C.
Acrylonitrile-butadiene-isoprene rubber: Product name "Nipol® DN1201", manufactured by ZEON CORPORATION, glass transition temperature: -26°C.
Styrene-butadiene rubber: Product name "Nipol® 1502", manufactured by ZEON CORPORATION, glass transition temperature: -51°C.
Chloroprene rubber: Product name "DENKA CHLOROPRENE M-40", manufactured by Denka Company Limited, glass transition temperature: -38°C.

(Plasticizer)

Diisodecyl phthalate: Product name "DIDP", manufactured by J-PLUS Co., Ltd.
Di(2-ethylhexyl) adipate: Product name "DOA", manufactured by J-PLUS Co., Ltd.
Tri(2-ethylhexyl) trimellitate: Product name "TOTM", manufactured by J-PLUS Co., Ltd.

(Inorganic Filler)

Carbon Black 1: Product name "SEAST® 3", manufactured by Tokai Carbon Co., Ltd.
Carbon Black 2: Product name "Diablack® H", manufactured by Mitsubishi Chemical Corporation.
Calcium Carbonate: Product name "CALSEEDS® P", manufactured by Konoshima Chemical Co., Ltd.
Silica: Product name "Nipsil® AQ", manufactured by Tosoh Silica Corporation.

[Table 1]

| BLEND | | UNITS | EXAMPLES | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| POLYVINYL CHLORIDE | POLYVINYL CHLORIDE 1 | (PARTS BY MASS) | 100 | 100 | 100 | 100 | 100 | 100 | 100 | | | 100 | 100 | 100 | 100 |
| | POLYVINYL CHLORIDE 2 | (PARTS BY MASS) | | | | | | | | 100 | | | | | |
| | ETHYLENE-POLYVINYL CHLORIDE COPOLYMER | (PARTS BY MASS) | | | | | | | | | 100 | | | | |
| ELASTOMER | ACRYLONITRILE-CHLOROPRENE RUBBER | (PARTS BY MASS) | 60 | 30 | 10 | 100 | 60 | 60 | 60 | 60 | | | | | |
| | ACRYLONITRILE-BUTADIENE RUBBER | (PARTS BY MASS) | | | | | | | | | 60 | | | | |
| | HYDROGENAT-ED ACRYLONI-TRILE-BUTADI-ENE RUBBER | (PARTS BY MASS) | | | | | | | | | | 60 | | | |
| | ACRYLONI-TRILE-BUTADI-ENE-ISOPRENE RUBBER | (PARTS BY MASS) | | | | | | | | | | | 60 | | |
| | STYRENE-BUTADIENE RUBBER | (PARTS BY MASS) | | | | | | | | | | | | 60 | |
| | CHLOROPRENE RUBBER | (PARTS BY MASS) | | | | | | | | | | | | | 60 |
| ADHESIVE TAPE (SUBSTRATE) | | | | | | | | | | | | | | | |

| BLEND | | | UNITS | EXAMPLES | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| PLASTICIZER | | uIISONONYL PHTHALATE | (PARTS BY MASS) | 40 | 40 | 40 | 40 | 10 | 70 | 100 | 40 | | | | 40 | 40 |
| | | DIISODECYL PHTHALATE | (PARTS BY MASS) | | | | | | | | | 40 | | | | |
| | | DI(2-ETHYLHEXYL) ADIPATE | (PARTS BY MASS) | | | | | | | | | | 40 | | | |
| | | TRI(2-ETHYLHEXYL) TRIMELLITATE | (PARTS BY MASS) | | | | | | | | | | | 40 | | |
| | FILLER | CARBON BLACK 1 | (PARTS BY MASS) | 50 | 50 | 50 | 50 | 50 | 50 | 50 | 50 | 50 | | | 10 | 2 |
| | | CARBON BLACK 2 | (PARTS BY MASS) | | | | | | | | | | 50 | | | |
| | | CARBON BLACK 3 | (PARTS BY MASS) | | | | | | | | | | | 50 | | |
| | | CALCIUM CARBONATE | (PARTS BY MASS) | | | | | | | | | | | | | |
| | | SILICA | (PARTS BY MASS) | | | | | | | | | | | | | |
| MANUFACTURING CONDITIONS | ANNEALING TREATME | | (°C×hr) | 100×2 | 100×2 | 100×2 | 100×2 | 100×2 | 100×2 | 100×2 | 100×2 | 100×2 | 100×2 | 100×2 | 100×2 | 100×2 |

EP 4 015 594 B1

16

| BLEND | | | UNITS | EXAMPLES | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| PHYSICAL PROPERTIES | DIMENSIONS | THICKNESS | (μm) | 400 | 400 | 400 | 400 | 400 | 400 | 400 | 400 | 400 | 400 | 400 | 400 | 400 |
| | | SURFACE ROUGHNESS (Ra) | (μm) | 1 | 1 | 1 | 1 | 1 | 1 | 1 | 1 | 1 | 1 | 1 | 1 | 1 |
| | | WIDTH | (mm) | 100 | 100 | 100 | 100 | 100 | 100 | 100 | 100 | 100 | 100 | 100 | 100 | 100 |
| | TAPE PHYSICAL PROPERTIES | ACOUSTIC ABSORPTION TEST ATTENUATION VALUE | (dB) | 3.2 | 2.8 | 2.2 | 4.2 | 2.5 | 3.7 | 4 | 3.1 | 3.4 | 3.7 | 3.2 | 3.7 | 4.1 |
| | | ADHESIVE FORCE | (N/10 mm) | 1.5 | 0.8 | 0.6 | 2.2 | 0.4 | 2.2 | 3.5 | 1.4 | 1.7 | 2.8 | 2.1 | 2.4 | 3.2 |
| | | DEFORMATION RATE | (%) | 0.5 | 0.3 | 0.2 | 0.8 | 0.1 | 0.1 | 0.1 | 0.5 | 0.5 | 0.5 | 0.5 | 0.5 | 0.5 |
| EVALUATION RESULTS | PERCUSSIVE SOUND SUPPRESSION | SOUND PRESSURE | (μPa) | 23 | 38 | 55 | 15 | 36 | 19 | 16 | 24 | 21 | 28 | 26 | 19 | 16 |
| | | EVALUATION RESULTS | (-) | B | B | C | A | B | A | A | B | B | B | B | A | A |
| | FRICTION SOUND SUPPRESSION | SOUND PRESSURE | (μPa) | 25 | 30 | 34 | 22 | 31 | 22 | 18 | 23 | 26 | 29 | 27 | I 24 | 22 |
| | | EVALUATION RESULTS | (-) | B | B | B | B | B | B | A | B | B | B | B | B | B |
| | PUNCTURE DURABILITY | MAXIMUM LOAD | (N) | 12 | 13 | 16 | 8 | 18 | 11 | 9 | 13 | 14 | 15 | 16 | 10 | 7 |
| | | EVALUATION RESULTS | (-) | B | B | A | C | A | B | C | B | B | A | A | B | C |
| | WEAR DURABILITY | WEAR DISTANCE | (mm) | 1100 | 1400 | 1700 | 800 | 1800 | 1000 | 700 | 1200 | 1300 | 1400 | 1500 | 900 | 700 |
| | | EVALUATION RESULTS | (-) | B | B | A | C | A | B | C | B | B | B | A | B | C |

EP 4 015 594 B1

(continued)

| BLEND | | | UNITS | EXAMPLES | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| | BENDABILITY | MINIMUM WIND-ABLE DIAMETER | (mm) | 8 | 9 | 10 | 6 | 12 | 6 | 4 | 7 | 9 | 8 | 9 | 6 | 4 |
| | | EVALUATION RESULTS | (-) | B | B | C | B | C | B | A | B | B | B | B | B | A |
| | BINDING | EVALUATION RESULTS | (-) | B | B | B | B | C | B | B | B | B | B | B | A | A |
| | WATER RESISTANCE | EVALUATION RESULTS | (-) | A | A | B | A | A | A | A | A | A | B | A | A | A |
| | OIL RESISTANCE | EVALUATION RESULTS | (-) | A | A | B | A | A | A | A | A | A | A | A | A | A |

[Table 2]

| BLEND | | | UNITS | EXAMPLES | | | | | | | | | | | | |
|---|---|---|---|---|---|---|---|---|---|---|---|---|---|---|---|---|
| | | | | 14 | 15 | 16 | 17 | 18 | 19 | 20 | 21 | 22 | 23 | 24 | 25 | 26 |
| | POLYVINYL CHLORIDE | POLYVINYL CHLORIDE 1 | (PARTS BY MASS) | 100 | 100 | 100 | 100 | 100 | 100 | 100 | 100 | 100 | 100 | 100 | 100 | 100 |
| | | POLYVINYL CHLORIDE 2 | (PARTS BY MASS) | | | | | | | | | | | | | |
| | | ETHYLENE-POLYVINYL CHLORIDE CO-POLYMER | (PARTS BY MASS) | | | | | | | | | | | | | |

(continued)

| BLEND | | UNITS | EXAMPLES | | | | | | | | | | | | |
|---|---|---|---|---|---|---|---|---|---|---|---|---|---|---|---|
| | | | 14 | 15 | 16 | 17 | 18 | 19 | 20 | 21 | 22 | 23 | 24 | 25 | 26 |
| ELASTOMER | ACRYLONITRILE-CHLOROPRENE RUBBER | (PARTS BY MASS) | 60 | 60 | 60 | 60 | 60 | 60 | 60 | 60 | 60 | 60 | 60 | 60 | 100 |
| | ACRYLONITRILE-BUTADIENE RUBBER | (PARTS BY MASS | | | | | | | | | | | | | |
| | RUBBER HYDROGENATED ACRYLONITRILE-BUTADIENE RUBBER | PARTS BY MASS (PARTS BY MASS) | | | | | | | | | | | | | |
| | ACRYLONITRILE-BUTADIENE-ISOPRENE RUBBER | (PARTS BY MASS) | | | | | | | | | | | | | |
| | STYRENE-BUTADIENE RUBBER | (PARTS BY MASS) | | | | | | | | | | | | | |
| | CHLOROPRENE RUBBER | (PARTS BY MASS) | | | | | | | | | | | | | |
| PLASTICIZER | DIISONONYL PHTHALATE | (PARTS BY MASS) | 40 | 40 | 40 | 40 | 40 | 40 | 40 | 40 | 40 | 40 | 40 | 40 | 100 |
| | DIISODECYL PHTHALATE | (PARTS BY MASS) | | | | | | | | | | | | | |
| | DI(2-ETHYLHEXYL) ADIPATE | (PARTS BY MASS) | | | | | | | | | | | | | |
| | TRI(2-ETHYLHEXYL) TRIMELLITATE | (PARTS BY MASS) | | | | | | | | | | | | | |
| ADHESIVE TAPE (SUBSTRATE) | | | | | | | | | | | | | | | |

(continued)

| BLEND | | | UNITS | EXAMPLES | | | | | | | | | | | | |
|---|---|---|---|---|---|---|---|---|---|---|---|---|---|---|---|---|
| | | | | 14 | 15 | 16 | 17 | 18 | 19 | 20 | 21 | 22 | 23 | 24 | 25 | 26 |
| | FILLER | CARBON BLACK 1 | (PARTS BY MASS) | | 80 | 110 | | | 50 | 50 | 50 | 50 | 50 | 50 | 50 | 30 |
| | | CARBON BLACK 2 | (PARTS BY MASS) | | | | | | | | | | | | | |
| | | CARBON BLACK 3 | (PARTS BY MASS) | | | | | | | | | | | | | |
| | | CALCIUM CARBONATE | (PARTS BY MASS) | | | | 50 | | | | | | | | | |
| | | SILICA | (PARTS BY MASS) | | | | | 50 | | | | | | | | |
| MANUFACTUR-ING CONDI-TIONS | ANNEALING TREATMENT | | (°C×hr) | 100×2 | 100×2 | 100×2 | 100×2 | 100×2 | 100×2 | 100×2 | 100×2 | 100×2 | 100×2 | NONE | NONE | 100×2 |

EP 4 015 594 B1

(continued)

| BLEND | | | UNITS | EXAMPLES | | | | | | | | | | | | |
|---|---|---|---|---|---|---|---|---|---|---|---|---|---|---|---|---|
| | | | | 14 | 15 | 16 | 17 | 18 | 19 | 20 | 21 | 22 | 23 | 24 | 25 | 26 |
| PHYSICAL PROPERTIES | DIMENSIONS | THICKNESS | (μm) | 400 | 400 | 400 | 400 | 400 | 200 | 600 | 800 | 400 | 400 | 400 | 400 | 500 |
| | | SURFACE ROUGHNESS (Ra) | (μm) | 1 | 1 | 1 | 1 | 1 | 1 | 1 | 1 | 1 | 1 | 1 | 40 | 0.3 |
| | | WIDTH | (mm) | 100 | 100 | 100 | 100 | 100 | 100 | 100 | 100 | 10 | 300 | 10 | 100 | 100 |
| | TAPE PHYSICAL PROPERTIES | ACOUSTIC ABSORPTION TEST ATTENUATION VALUE | (dB) | 4.3 | 2.8 | 2.5 | 3.3 | 3.5 | 2.1 | 4 | 5.5 | 3.2 | 3.2 | 3.2 | 3.2 | 6.1 |
| | | ADHESIVE FORCE | (N/10 mm) | 5.5 | 0.7 | 0.3 | 1.4 | 1.8 | 0.7 | 1.7 | 2.1 | 1.5 | 1.5 | 1.3 | 0.4 | 5.5 |
| | | DEFORMATION RATE | (%) | 0.5 | 0.5 | 0.5 | 0.4 | 0.3 | 0.5 | 0.7 | 0.8 | 0.5 | 0.5 | 12 | 5.3 | 5.3 |
| EVALUATION RESULTS | PERCUSSIVE SOUND SUPPRESSION | SOUND PRESSURE | (uPa) | 18 | 32 | 44 | 26 | 28 | 56 | 18 | 11 | 23 | 23 | 23 | 23 | 18 |
| | | EVALUATION RESULTS | (-) | A | B | C | B | B | C | A | A | B | B | B | B | A |
| | FRICTION SOUND SUPPRESSION | SOUND PRESSURE | (uPa) | 21 | 31 | 35 | 24 | 27 | 24 | 26 | 28 | 25 | 25 | 25 | 25 | 18 |
| | | EVALUATION RESULTS | (-) | B | B | B | B | B | B | B | B | B | B | B | B | A |
| | PUNCTURE DURABILITY | MAXIMUM LOAD | (N) | 6 | 15 | 20 | 9 | 13 | 6 | 18 | 24 | 12 | 12 | 12 | 12 | 13 |
| | | EVALUATION RESULTS | (-) | C | A | A | C | B | C | A | A | B | B | B | B | B |
| | WEAR DURABILITY | WEAR DISTANCE | (mm) | 600 | 1600 | 1900 | 900 | 1200 | 500 | 1600 | 2300 | 1100 | 1100 | 1100 | 1100 | 1000 |
| | | EVALUATION RESULTS | (-) | C | A | A | B | B | C | A | A | B | B | B | B | B |

(continued)

| BLEND | | | UNITS | EXAMPLES | | | | | | | | | | | | |
|---|---|---|---|---|---|---|---|---|---|---|---|---|---|---|---|---|
| | | | | 14 | 15 | 16 | 17 | 18 | 19 | 20 | 21 | 22 | 23 | 24 | 25 | 26 |
| | BENDABILITY | MINIMUM WIND-ABLE DIAMETER | (mm) | 4 | 11 | 13 | 8 | 9 | 4 | 11 | 14 | 4 | 13 | 5 | 5 | 4 |
| | | EVALUATION RESULTS | (-) | A | C | C | B | B | A | C | C | A | C | A | A | A |
| | BINDING | EVALUATION RESULTS | (-) | A | B | C | C | B | A | B | C | B | B | C | C | B |
| | WATER RESISTANCE | EVALUATION RESULTS | (-) | A | B | C | C | B | B | B | C | B | B | C | C | B |
| | OIL RESISTANCE | EVALUATION RESULTS | (-) | A | B | C | C | B | B | B | C | B | B | C | C | B |

[Table 3]

| BLEND | | | UNITS | COMPARATIVE EXAMPLES | | | | | | |
|---|---|---|---|---|---|---|---|---|---|---|
| | | | | 1 | 2 | 3 | 4 | 5 | 6 | 7 |
| | POLYVINYL CHLORIDE | POLYVINYL CHLORIDE 1 | (PARTS BY MASS) | 100 | 100 | 100 | 100 | 100 | 100 | 100 |
| | | POLYVINYL CHLORIDE 2 | (PARTS BY MASS) | | | | | | | |
| | | ETHYLENE-POLYVINYL CHLORIDE COPOLYMER | (PARTS BY MASS) | | | | | | | |

(continued)

| BLEND | | | UNITS | COMPARATIVE EXAMPLES | | | | | | |
|---|---|---|---|---|---|---|---|---|---|---|
| | | | | 1 | 2 | 3 | 4 | 5 | 6 | 7 |
| ADHESIVE TAPE (SUBSTRATE) | ELASTOMER | ACRYLONITRILE-CHLOROPRENE RUBBER | (PARTS BY MASS) | | | 110 | 40 | 60 | 60 | 60 |
| | | ACRYLONITRILE-BUTADIENE RUBBER | (PARTS BY MASS) | | | | | | | |
| | | HYDROGENATED ACRYLONITRILE-BUTADIENE RUBBER | (PARTS BY MASS) | | | | | | | |
| | | ACRYLONITRILE-BUTADIENE-ISOPRENE RUBBER | (PARTS BY MASS) | | | | | | | |
| | | STYRENE-BUTADIENE RUBBER | (PARTS BY MASS) | | | | | | | |
| | | CHLOROPRENE RUBBER | (PARTS BY MASS) | | | | | | | |
| | PLASTICIZER | DIISONONYL PHTHALATE | (PARTS BY MASS) | 40 | 20 | 60 | | 110 | 40 | 40 |
| | | DIISODECYL PHTHALATE | (PARTS BY MASS) | | | | | | | |
| | | DI(2-ETHYLHEXYL) ADIPATE | (PARTS BY MASS) | | | | | | | |
| | | TRI(2-ETHYLHEXYL) TRIMELLITATE | (PARTS BY MASS) | | | | | | | |

| BLEND | | | UNITS | COMPARATIVE EXAMPLES | | | | | | |
|---|---|---|---|---|---|---|---|---|---|---|
| | | | | 1 | 2 | 3 | 4 | 5 | 6 | 7 |
| | FILLER | CARBON BLACK 1 | (PARTS BY MASS) | 50 | 50 | 50 | 50 | 50 | 50 | 200 |
| | | CARBON BLACK 2 | (PARTS BY MASS) | | | | | | | |
| | | CARBON BLACK 3 | (PARTS BY MASS) | | | | | | | |
| | | CALCIUM CARBONATE | (PARTS BY MASS) | | | | | | | |
| | | SILICA | (PARTS BY MASS) | | | | | | | |
| MANUFACTURING CONDITIONS | ANNEALING TREATMENT | | (°C×hr) | 100×2 | 100×2 | 100×2 | 100×2 | 100×2 | 100×2 | 100×2 |
| PHYSICAL PROPERTIES | DIMENSIONS | THICKNESS | (um) | 400 | 400 | 400 | 400 | 400 | 100 | 400 |
| | | SURFACE ROUGHNESS (Ra) | (μM) | 1 | 40 | 1 | 1 | 1 | 1 | 1 |
| | | WIDTH | (mm) | 100 | 100 | 100 | 100 | 100 | 100 | 100 |
| | TAPE PHYSICAL PROPERTIES | ACOUSTIC ABSORPTION TEST ATTENUATION VALUE | (dB) | 1.8 | 1.1 | 4.2 | 2.5 | 4 | 1.4 | 18 |
| | | ADHESIVE FORCE | (N/10 mm) | 0 | 0 | 3.8 | 0.4 | 3.5 | 0.7 | 13 |
| | | DEFORMATION RATE | (%) | 0.3 | 0.3 | 1.2 | 0.1 | 0.1 | 0.5 | 12 |
| | PERCUSSIVE SOUND SUPPRESSION | SOUND PRESSURE | (μPa) | 65 | 54 | 17 | 46 | 15 | 75 | 63 |
| | | EVALUATION RESULTS | (-) | D | C | A | C | A | D | D |

(continued)

| BLEND | | | UNITS | COMPARATIVE EXAMPLES | | | | | | |
|---|---|---|---|---|---|---|---|---|---|---|
| | | | | 1 | 2 | 3 | 4 | 5 | 6 | 7 |
| EVALUATION RESULTS | FRICTION SOUND SUPPRESSION | SOUND PRESSURE | ($\mu$Pa) | 43 | 78 | 20 | 38 | 24 | 48 | 42 |
| | | EVALUATION RESULTS | (-) | C | D | B | B | B | C | C |
| | PUNCTURE DURABILITY | MAXIMUM LOAD | (N) | 18 | 20 | 6 | 22 | 4 | 4 | 15 |
| | | EVALUATION RESULTS | (-) | A | A | C | A | D | D | A |
| | WEAR DURABILITY WEAR DURABILITY | WEAR DISTANCE | (mm) | 2000 | 2400 | 400 | 2500 | 300 | 300 | 1500 |
| | | EVALUATION RESULTS | (-) | A | A | D | A | D | D | A |
| | BENDABILITY | MINIMUM WINDABLE DIAMETER | (mm) | 13 | 14 | 3 | 16 | 3 | 4 | 13 |
| | | EVALUATION RESULTS | (-) | C | C | A | D | A | A | C |
| | BINDING | EVALUATION RESULTS | (-) | D | D | B | C | B | A | C |
| | WATER RESISTANCE | EVALUATION RESULTS | (-) | B | B | A | A | A | B | A |
| | OIL RESISTANCE | EVALUATION RESULTS | (-) | B | B | A | A | A | B | A |

EP 4 015 594 B1

As shown in Tables 1-3, the adhesive tapes of Examples 1-20 and 22-26, which satisfy the features of the present application, were excellent in all the physical properties of percussive sound and friction sound suppressive effects, puncture durability, wear durability, bendability, binding, and water and oil resistance. In this context, it is once more noted that Example 21 does not fall under the scope of the present invention. Meanwhile, the adhesive tapes of Comparative Examples 1-7, which do not satisfy the features of the present invention, were not capable of meeting all of the abovementioned physical properties. It was confirmed according to the foregoing results that the adhesive tape of the present invention can reduce percussive sounds or friction sounds, can prevent contamination of a covered article due to permeation by water or oil, has durability against puncture or friction, and easily bends after binding a covered article.

**Claims**

1. An adhesive tape having a substrate comprising 100 parts by mass of a polyvinyl chloride, with the polyvinyl chloride including one or more of the group consisting of homopolymers of polyvinyl chloride, vinyl chloride-vinyl acetate copolymers, vinyl chloride-ethylene copolymers and vinyl chloride-propylene copolymers, and, with respect to the 100 parts by mass of the polyvinyl chloride, 10-100 parts by mass of an elastomer and 10-100 parts by mass of a plasticizer, wherein

   the elastomer comprises an acrylonitrile monomer unit and at least one monomer unit selected from the group consisting of a chloroprene monomer unit, a butadiene monomer unit, and an isoprene monomer unit,
   the adhesive tape has an attenuation value of 2 dB or greater in an acoustic absorption test, with the test being performed by

   - bending a 350 mm × 190 mm aluminum plate with a plate thickness of 0.3 mm into a semicircle with a diameter of 290 mm,
   - dropping a steel rod with a diameter of 8 mm with a load of 0.16 N from a position 20 mm above the apex of the aluminum plate,
   - measuring the noise at impact in dB as units with a microphone installed 50 mm above the impact position, wherein the noise when one layer of an adhesive tape sample with a dimension of 25 mm × 50 mm is attached to the impact position of the steel rod is measured and the difference with respect to the noise measured with the steel rod alone is defined as the attenuation value, and

   the thickness of the substrate is 150 - 750 μm.

2. The adhesive tape according to claim 1, wherein the glass transition temperature of the elastomer is -40°C to 0°C with the glass transition temperature being the inflection point of the change in heat capacity according to a differential scanning calorimetry method when the temperature is changed from -100°C to 100°C at a rate of temperature increase of 10°C/minute under atmospheric pressure, wherein the glass transition temperature conforms to the Japanese Industrial Standard (JIS) K 7121 and can be calculated from the intermediate glass transition temperature, the extrapolated glass transition initiation temperature and the extrapolated glass transition ending temperature with

   - the intermediate glass transition temperature being defined as the temperature at the intersection of a straight line equidistant in the direction of the vertical axis from straight lines extended from each baseline with the curved line of the stepwise change portion of the glass transition,
   - the extrapolated glass transition initiation temperature being defined as the temperature at the intersection between a straight line extending the low-temperature side baseline to the high-temperature side and a tangent line drawn at the point where the gradient of the curved line of the stepwise change portion of the glass transition is at its maximum; and
   - the extrapolated glass transition ending temperature being defined as the temperature at the intersection between a straight line extending the high-temperature baseline to the low-temperature side and a tangent line drawn at the point where the gradient of the curved line of the stepwise change portion of the glass transition is at its maximum,

   wherein the glass transition temperature is the value measured for the intermediate glass transition temperature directly under the conditions described in the differential scanning calorimetry method.

3. The adhesive tape according to claim 1 or 2, wherein the plasticizer is a diester of phthalic acid and an alcohol with 9 or 10 carbon atoms.

4. The adhesive tape according to any one of claims 1 to 3, wherein the adhesive force when one surface of the substrate is superimposed on another surface of the substrate is 0.5-5 N/10 mm, with the adhesive force being the 180° peeling adhesive force between the one surface and the other surface as measured based on Japanese Industrial Standard (JIS) Z 0237.

5. The adhesive tape according to any one of claims 1 to 4, wherein the substrate comprises 1-50 parts by mass of carbon black with respect to the 100 parts by mass of the polyvinyl chloride.

6. The adhesive tape according to any one of claims 1 to 5, wherein the tape width of the adhesive tape is 10-300 mm and, the deformation rate after being wound into a rolled form and left for 72 hours at 65°C is 10% or less, wherein the deformation rate of the adhesive tape is calculated with the following formula

$$\text{deformation rate (\%)} = ([W2]-[W1])/[W1] \times 100$$

with W1 being the tape roll width prior to being left and W2 being the tape roll width after being left.

**Patentansprüche**

1. Ein Klebeband mit einem Substrat, das 100 Massenteile eines Polyvinylchlorids beinhaltet, wobei das Polyvinylchlorid eines oder mehrere aus der Gruppe umfasst, die aus Homopolymeren von Polyvinylchlorid, Vinylchlorid- Vinylacetat-Copolymeren, Vinylchlorid-Ethylen-Copolymeren und Vinylchlorid-Propylen-Copolymeren besteht, und, mit Bezug auf die 100 Massenteile des Polyvinylchlorids, 10-100 Massenteile eines Elastomers und 10-100 Massenteile eines Weichmachers beinhaltet, wobei das Elastomer eine Acrylnitril-Monomereinheit und mindestens eine Monomereinheit, ausgewählt aus der Gruppe, die aus einer Chloropren-Monomereinheit, einer Butadien-Monomereinheit und einer Isopren-Monomereinheit besteht, beinhaltet,

   das Klebeband in einem akustischen Absorptionstest einen Dämpfungswert von 2 dB oder mehr aufweist, wobei der Test durch Folgendes durchgeführt wird:

   - Biegen einer Aluminiumplatte von 350 mm × 190 mm mit einer Plattendicke von 0,3 mm in einen Halbkreis mit einem Durchmesser von 290 mm,
   - Fallenlassen eines Stahlstiftes mit einem Durchmesser von 8 mm mit einer Last von 0,16 N aus einer Position 20 mm über dem Scheitel der Aluminiumplatte,
   - Messen des Schalls beim Aufprall in dB als Einheiten mit einem Mikrofon, das 50 mm über der Aufprallposition installiert ist, wobei der Schall, wenn eine Schicht einer Klebebandprobe mit einer Dimension von 25 mm × 50 mm an der Aufprallposition des Stahlstiftes angebracht ist, gemessen wird und die Differenz mit Bezug auf den mit dem Strahlstift allein gemessenen Schall als der Dämpfungswert definiert ist und

   die Dicke des Substrats 150-750 μm beträgt.

2. Klebeband gemäß Anspruch 1, wobei die Glasübergangstemperatur des Elastomers

   - 40 °C bis 0 °C beträgt, wobei die Glasübergangstemperatur der Wendepunkt der Änderung der Wärmekapazität gemäß einem Verfahren der dynamischen Differenzkalorimetrie ist, wenn die Temperatur von -100 °C auf 100 °C mit einer Geschwindigkeit der Temperaturerhöhung von 10 °C/Minute unter Normaldruck geändert wird, wobei die Glasübergangstemperatur mit dem Japanese Industrial Standard (JIS) K 7121 übereinstimmt und aus der Glasübergangszwischentemperatur, der extrapolierten Glasübergangsanfangstemperatur und der extrapolierten Glasübergangsendtemperatur errechnet werden kann, wobei
   - die Glasübergangszwischentemperatur als die Temperatur an dem Schnittpunkt einer geraden Linie, die in der Richtung der vertikalen Achse zu geraden Linien, die von jeder Grundlinie aus verlängert sind, äquidistant ist, mit der gekrümmten Linie des Abschnitts der schrittweisen Änderung des Glasübergangs definiert ist,
   - die extrapolierte Glasübergangsanfangstemperatur als die Temperatur an dem Schnittpunkt zwischen einer geraden Linie, die die Grundlinie der Seite niedriger Temperatur zu der Seite hoher Temperatur verlängert, und einer Tangente, die an dem Punkt gezogen wird, wo der Gradient der gekrümmten Linie des Abschnitts der schrittweisen Änderung des Glasübergangs sein Maximum aufweist, definiert ist; und
   - die extrapolierte Glasübergangsendtemperatur als die Temperatur an dem Schnittpunkt zwischen einer geraden Linie, die die Grundlinie der Seite hoher Temperatur zu der Seite niedriger Temperatur verlängert, und einer Tangente, die an dem Punkt gezogen wird, wo der Gradient der gekrümmten Linie des Abschnitts der schrittweisen Änderung des Glasübergangs sein Maximum aufweist, definiert ist,

wobei die Glasübergangstemperatur der Wert ist, der für die Glasübergangszwischentemperatur direkt unter den Bedingungen gemessen wird, die in dem Verfahren der dynamischen Differentialkalorimetrie beschrieben werden.

**3.** Klebeband gemäß Anspruch 1 oder 2, wobei der Weichmacher ein Diester von Phthalsäure und einem Alkohol mit 9 oder 10 Kohlenstoffatomen ist.

**4.** Klebeband gemäß einem der Ansprüche 1 bis 3, wobei das Haftvermögen, wenn eine Oberfläche des Substrats über eine andere Oberfläche des Substrats gelegt wird, 0,5-5 N/10 mm beträgt, wobei das Haftvermögen das Haftvermögen im Abziehtest unter 180 °C zwischen der einen Oberfläche und der anderen Oberfläche, wie bezogen auf den Japanese Industrial Standard (JIS) Z 0237 gemessen, ist.

**5.** Klebeband gemäß einem der Ansprüche 1 bis 4, wobei das Substrat 1-50 Massenteile Rußschwarz mit Bezug auf die 100 Massenteile des Polyvinylchlorids beinhaltet.

**6.** Klebeband gemäß einem der Ansprüche 1 bis 5, wobei die Bandbreite des Klebebands 10-300 mm beträgt und die Verformungsgeschwindigkeit nach dem in eine gerollte Form Gerolltwerden und dem für 72 Stunden bei 65 °C Gelassenwerden 10 % oder weniger beträgt, wobei die Verformungsrate des Klebebands mit der folgenden Formel errechnet wird:

$$\text{Verformungsrate (\%)} = ([W2] - [W1])/[W1] \times 100,$$

wobei W1 die Bandrollenbreite vor dem Gelassenwerden ist und W2 die Bandrollenbreite nach dem Gelassenwerden ist.

## Revendications

**1.** Un ruban adhésif ayant un substrat comprenant 100 parties en masse d'un chlorure de polyvinyle, le chlorure de polyvinyle incluant un ou plusieurs éléments du groupe constitué d'homopolymères de chlorure de polyvinyle, de copolymères de chlorure de vinyle-acétate de vinyle, de copolymères de chlorure de vinyle-éthylène et de copolymères de chlorure de vinyle-propylène, et, par rapport aux 100 parties en masse du chlorure de polyvinyle, de 10 à 100 parties en masse d'un élastomère et de 10 à 100 parties en masse d'un plastifiant, dans lequel

l'élastomère comprend une unité de monomère acrylonitrile et au moins une unité de monomère sélectionnée dans le groupe constitué d'une unité de monomère chloroprène, d'une unité de monomère butadiène, et d'une unité de monomère isoprène,
le ruban adhésif ayant une valeur d'atténuation de 2 dB ou plus dans un test d'absorption acoustique, le test étant réalisé par

- pliage d'une plaque d'aluminium de 350 mm × 190 mm d'une épaisseur de plaque de 0,3 mm en un demi-cercle d'un diamètre de 290 mm,
- le fait de faire tomber une tige d'acier d'un diamètre de 8 mm avec une charge de 0,16 N depuis une position à 20 mm au-dessus du sommet de la plaque d'aluminium,
- mesure du bruit à l'impact en dB en tant qu'unités grâce à un microphone installé à 50 mm au-dessus de la position d'impact, le bruit, lorsqu'une couche d'un échantillon de ruban adhésif d'une dimension de 25 mm × 50 mm est attachée à la position d'impact de la tige d'acier, étant mesuré et la différence par rapport au bruit mesuré avec la tige d'acier seule étant définie comme la valeur d'atténuation, et

l'épaisseur du substrat allant de 150 à 750 μm.

**2.** Le ruban adhésif selon la revendication 1, dans lequel la température de transition vitreuse de l'élastomère va de -40 °C à 0 °C, la température de transition vitreuse étant le point d'inflexion de la modification de la capacité thermique selon un procédé de calorimétrie différentielle à balayage lorsque la température est modifiée de -100 °C à 100 °C à une vitesse d'augmentation de température de 10 °C/minute sous pression atmosphérique, dans lequel la température de transition vitreuse est conforme à la norme industrielle japonaise (JIS) K 7121 et peut être calculée à partir de la température de transition vitreuse intermédiaire, de la température de départ de transition vitreuse extrapolée et de la température de fin de transition vitreuse extrapolée

- la température de transition vitreuse intermédiaire étant définie comme la température à l'intersection d'une ligne droite équidistante dans la direction de l'axe vertical de lignes droites étendues depuis chaque ligne de base avec la ligne courbe de la portion de modification par étapes de la transition vitreuse,
- la température de départ de transition vitreuse extrapolée étant définie comme la température à l'intersection entre une ligne droite s'étendant de la ligne de base de côté de température basse au côté de température élevée et une ligne tangente tirée au point où le gradient de la ligne courbe de la portion de modification par étapes de la transition vitreuse est à son maximum ; et
- la température de fin de transition vitreuse extrapolée étant définie comme la température à l'intersection entre une ligne droite s'étendant de la ligne de base de température élevée au côté de température basse et une ligne tangente tirée au point où le gradient de la ligne courbe de la portion de modification par étapes de la transition vitreuse est à son maximum,

dans lequel la température de transition vitreuse est la valeur mesurée pour la température de transition vitreuse intermédiaire directement dans les conditions décrites dans le procédé de calorimétrie différentielle à balayage.

3. Le ruban adhésif selon la revendication 1 ou la revendication 2, dans lequel le plastifiant est un diester d'acide phtalique et d'un alcool présentant 9 ou 10 atomes de carbone.

4. Le ruban adhésif selon n'importe laquelle des revendications 1 à 3, dans lequel la force d'adhérence lorsqu'une surface du substrat est superposée sur une autre surface du substrat va de 0,5 à 5 N/10 mm, la force d'adhérence étant la force d'adhérence au pelage à 180° entre cette une surface et l'autre surface telle que mesurée sur la base de la norme industrielle japonaise (JIS) Z 0237.

5. Le ruban adhésif selon n'importe laquelle des revendications 1 à 4, dans lequel le substrat comprend de 1 à 50 parties en masse de noir de carbone par rapport aux 100 parties en masse du chlorure de polyvinyle.

6. Le ruban adhésif selon n'importe laquelle des revendications 1 à 5, dans lequel la largeur de ruban du ruban adhésif va de 10 à 300 mm, et le taux de déformation après avoir été enroulé en une forme roulée et laissé pendant 72 heures à 65 °C est de 10 % ou moins, dans lequel le taux de déformation du ruban adhésif est calculé grâce à la formule suivante

$$\text{taux de déformation (\%)} = ([W2] - [W1])/[W1] \times 100,$$

W1 étant la largeur de rouleau de ruban préalablement au fait d'être laissé et W2 étant la largeur de rouleau de ruban après avoir été laissé.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016158412 A1
- WO 2016158411 A1
- JP H09263733 A
- WO 2018168990 A1
- EP 3075806 A1
- EP 3279283 A1
- JP S62158734 A
- JP 2004524376 A
- JP 2006152192 A
- JP 5572546 B
- JP H117856 A